# EUROPEAN PATENT SPECIFICATION

(11) **EP 3 122 449 B1**
(45) Date of publication and mention of the grant of the patent: **27.11.2019**
(21) Application number: 15734241.1
(22) Date of filing: 19.03.2015
(51) Int. Cl.: C10L 3/10, B01J 19/12

(54) **PROCESS FOR PREVENTING THE FORMATION OF HYDRATES IN FLUIDS CONTAINING GAS OR GAS CONDENSATE**
VERFAHREN ZUR VERMEIDUNG DER BILDUNG VON HYDRATEN IN FLÜSSIGKEITEN MIT GAS ODER GASKONDENSAT
PROCÉDÉ POUR EMPÊCHER LA FORMATION D'HYDRATES DANS DES FLUIDES CONTENANT DU GAZ OU DU CONDENSAT DE GAZ

(30) Priority: 24.03.2014 IT MI20140493
(43) Date of publication of application: 01.02.2017
(73) Proprietor: ENI S.p.A., 00144 Roma (IT)
(72) Inventor: CARMINATI, Stefano, 20900 Monza (MB) (IT); ZAMPATO, Massimo, 30030 Salzano (VE) (IT)
(74) Representative: Bottero, Carlo
(86) International application number: PCT/IT2015/000072
(87) International publication number: WO 2015/145474

(56) References cited:
- WO-A1-98/29369
- WO-A1-2006/110192
- WO-A1-2006/110192
- US-A- 5 625 178
- US-A- 5 625 178
- US-A- 5 625 178
- US-A1- 2003 178 195
- US-A1- 2003 178 195
- US-A1- 2013 341 179
- US-A1- 2013 341 179
- US-A1- 2013 341 179
- G. F. Reiter ET AL: "Evidence for an anomalous quantum state of protons in nanoconfined water", PHYSICAL REVIEW. B, vol. 85, no. 4, 1 January 2012 (2012-01-01), XP055560257, US ISSN: 1098-0121, DOI: 10.1103/PhysRevB.85.045403

## Description

The present invention relates to a process for preventing the formation of hydrates in fluids containing gas or gas condensate.

Hydrates are crystalline compounds similar to ice, which are formed in the presence of water and gas under particular thermodynamic conditions in which a large quantity of a gas or a gas condensate (such as methane, for example) is trapped inside the crystalline structure of the water. The thermodynamic conditions necessary for the formation of hydrates are a high pressure and low temperature, i.e. typical conditions that occur in deep seabeds or, with reference to the Oil & Gas industry, in the transportation of hydrocarbons. The formation of hydrates is a stochastic process which generally requires an induction time which varies according to the thermodynamic conditions and a formation time of the hydrate with a growth that can be massive. A non-exhaustive list of gases or condensed gases which, in the presence of water and favourable environmental conditions, generate hydrates, is provided in Table 1.

**Table 1 - List of gases compatible with the formation of hydrates**

| | | |
|---|---|---|
| He | O₂ | c-C₃H₆ |
| H₂ | CH₄ | (CH₂)₃O |
| Ne | Xe | C₃H₈ |
| Ar | H₂S | i-C₄H₁₀ |
| Kr | CO₂ | n-C₄H₁₀ |
| N₂ | C₂H₆ | |

The philosophy normally used for preventing the formation of hydrates in treatment processes for the transportation in pipelines or on ships for liquefied or compressed methane transportation is to suitably configure the operative conditions of the process so as to make the thermodynamic conditions unfavourable for the formation of hydrates. Adopting a particular pressure, for example, at the outlet of a pipeline allows the operating pressure in the pipeline to be altered and, in favourable cases, to prevent the formation of hydrates. As far as the storage of liquefied or compressed methane on ships is concerned, on the other hand, the reduction in the quantity of water contained in the gas minimizes the risk of the formation of hydrates. There are cases, however, in which it is not always possible to establish an operational process condition that allows the problem of hydrates to be eliminated. In these cases, resort is made to the use of chemical agents which alter the conditions for the formation of hydrates. Chemical inhibitors can be classified in two macro-categories: thermodynamic inhibitors, which alter the thermodynamic conditions for the formation of hydrates by lowering the temperature for their formation or, as an alternative, kinetic inhibitors or anti-agglomerant agents which delay the formation or aggregation of the hydrates.

Traditional techniques, such as, for example, the use of chemical agents for preventing the formation of hydrates, require specific structures for the injection of chemicals upstream of the critical points identified, a recovery system downstream and a regeneration section for re-using the chemicals, with significant costs. In off-shore plants, for example, where sea-lines or risers are usually present and where the operating temperatures are extremely low (close to zero) with high pressures due to the depth, umbilical systems are used for transporting the chemical inhibitors to the head of the sea-line/riser in order to prevent the formation of hydrates during transportation. In these plants, a first step of the process is necessary for the treatment of the stream transported in order to recover the chemical agents injected; a treatment of the chemicals recovered is then necessary together with their regeneration, so that they can be re-used.

The chemical agents can be classified in two macro-categories:
- Thermodynamic inhibitors. These inhibitors alter the thermodynamic formation conditions, lowering the formation temperature. Methanol falls within this category, in addition to mono-ethylene glycol (MEG) or diethylene glycol (DEG), etc. The quantity depends on the water content and the sub-cooling temperature required. Their advantage is the complete protection of the plant at the expense of very high costs.
- Kinetic and/or anti-agglomerant inhibitors. These inhibitors are not widely used at present, due to the difficulties encountered in determining the exact quantities, which require extensive tests. They operate by slowing down the nucleation kinetics or, in the case of anti-agglomerant agents, the agglomeration of large crystals of hydrates. The dosage required is significantly lower with respect to thermodynamic inhibitors. Unfortunately their use requires a knowledge of the formation kinetics of the fluid treated, in terms of induction time or growth rate of the crystals. This information is not easily found, unless experimentally, and greatly depends on the chemical composition of the fluid transported which, inter alia, alters with the production progress. Furthermore, in the case of a plant shutdown, the kinetic inhibitors do not preserve the integrity of the plant, should the shutdown be prolonged with time.

In order to limit problems of "flow assurance" in pipelines, processes of a physical nature are also known from literature; these are based on the use of sound-waves (US 7597148) or electromagnetic waves (US 5625178; US2002/169345). In particular, US-5625178 describes a process and a system for preventing the formation of hydrates in fluids containing an aqueous phase and hydrocarbons by means of electromagnetic waves having frequencies ranging from 1 to 10 GHz, emitted, also intermittently, in the form of pulse trains.

The process described therein, however, has some critical points, among which:
- The necessity of tuning the frequency to be used according to the chemical composition of the fluids.
- The selection of the frequency with which to intervene also depends on the dimensions of the pipeline as it is used as waveguide for the propagation of the electromagnetic radiation in order to increase the exposure time with the fluids contained therein.
- The frequencies within the microwave spectrum, from an energy point of view, are less efficient with respect to higher frequencies (such as, for example, frequencies belonging to the infrared spectrum) as they are only capable of triggering rotational motions in the molecules and not vibrational motions as disclosed in US2002/169345.

US 2013/0341179 A1 discloses a method of dissociating and recovering methane from solid hydrate deposits, including at least applying electromagnetic radiation to the methane hydrate to dissociate the methane-water bond.

We have now found an innovative process which allows the formation of hydrates to be inhibited in fluids containing gas or gas condensate, in all situations in which there are favourable conditions, thanks to the surprising capacities of electromagnetic waves operating within the spectrum starting from 500 nm up to infrared.

The innovative process proposed differs from the known art as it is no longer necessary to use chemical additives, its efficacy being based on the use of electromagnetic radiations within a well-defined frequency range. The possible presence of additives does not modify its efficacy, on the contrary, there may be advantages due to the combined effect of the two actions, electromagnetic and chemical.

It is presumed that the electromagnetic radiation interferes with the structure of the water at a molecular level that leads to the inhibition of the formation of hydrates. This inhibition continues to occur even without electromagnetic excitation for a period of time, continuing, in fact, to preserve the asset from the formation of hydrates. This behaviour, typical of kinetic inhibitors, has the advantage of not requiring a training phase, as exposure alone to the radiation is sufficient. In the case of kinetic

inhibitors, an intense *in situ* training phase is normally necessary for determining the dosage which minimizes the quantity and maximizes the effects. This is not a *una tantum* operation but depends on the type of flow, the operative conditions, quantity of water produced, etc., all conditions which obviously change during the productive life of the well.

The innovative process, moreover, is also particularly useful in localized situations considered critical, such as, for example, the valves, curves, junctions etc. In this case, an intervention *ad hoc* allows the problem to be solved without complicating the remaining part of the plant, with a lower economic impact.

The process, object of the present invention, for preventing the formation of hydrates in fluids containing gas or gas condensate according to claim 1. Such a process comprises subjecting said fluids to electromagnetic waves, preventing the formation of crystalline bonds which are responsible for the formation of said hydrates, and is characterized in that

the electromagnetic radiations operate within the visible and infrared spectrum region included in the A band from 500 nm or higher to lower than 0.1 mm (from 3 THz or higher to 600 THz or lower), preferably from equal to or greater than 700 nm to less than or equal to 0.1 mm (from equal to or greater than 3 THz to less than or equal to 428 THz), more preferably from equal to or greater than 700 nm to less than or equal to 6 µm (from equal to or greater than 50 THz to less than or equal to 428 THz).

Among the electromagnetic sources operating within the infrared spectrum which can be used, with a possible extension also to the visible spectrum, local sources of the led type, continuous wave laser and/or pulsed laser type can be mentioned, but not exclusively, or remote sources whose radiation is transported to the points of interest, for example, by means of optical fibres. With reference to pulsed lasers, those having a pulse duration in the order of femtoseconds capable of inducing particularly interesting phenomena in the material, are of particular interest.

The action of the electromagnetic waves causes an alteration in the molecular structure of the hydrate, preventing its formation.

The gas or gas condensate contained in the fluids which can form hydrates can be among those listed in Table 1, preferably hydrocarbons such as methane, ethane, propane.

As mentioned above, chemical additives, inhibitors of hydrates, can be advantageously added to the fluids containing gas or gas condensate, in particular thermodynamic inhibitors and/or kinetic inhibitors and/or anti-agglomerant agents.

The electromagnetic waves can be emitted by means of radiation stations, which can comprise at least one electromagnetic source electrically powered by means of an umbilical system, and preferably also one or more light source(s) situated inside the pipeline, through which the light radiation interacts with the flow transported.

The irradiation stations can be advantageously positioned:
- along pipelines transporting and/or treating fluids containing gases or gas condensates;
- in sea-lines and risers of off-shore plants used for transporting gases/gas condensates;
- upstream and downstream of choke valves;
- in any point of a liquefaction or compression plant of methane for storage (for example, but not limited to these, on ships for the transportation of compressed or liquefied gas, in tanks, in wells and/or in surface structures for the transportation of gas/ gas condensates for storage in geological structures)
- in any point of unloading and/or transportation plant of gas coming from compressed or liquefied methane carriers, tanks or geological structures.

The electromagnetic waves can also be emitted by means of irradiating stations substantially the same as those described above for preventing the formation of hydrates and advantageously positioned in the same points, also for dissolving the hydrates formed in the fluids containing gas or gas condensate.

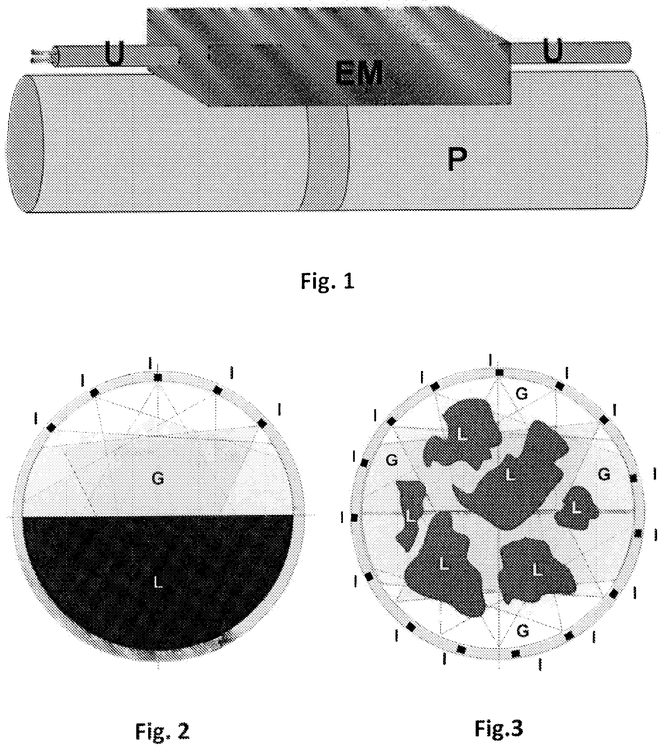

Descriptions of embodiments of the invention are provided hereunder, using figures 1-4, which should not be considered as being limited to the same or by the same.

The process can be applied in a system that consists of a series of electromagnetic irradiation stations positioned along the pipeline, risers or flowlines suitably spaced from each other. Each station interacts with the flow transported, disassociating any possible formation of hydrate already present in the fluid and inducing a reordering of the molecular structure of the water with the effect of inhibiting the formation of hydrates for a certain period of time.

Each irradiation station, of which an example is provided in figure 1, consists of an electromagnetic source (EM) electrically powered by means of an umbilical system (U) and by various light sources through which the light radiation interacts with the stream transported in the pipeline/sea-line (P). In determining the number of irradiation stations, it should be considered that this depends on:
- The thermodynamic conditions present during the transportation of the fluid. Considering the risers, for example, i.e. the means for transporting the hydrocarbons from the marine wells up to the surface, only a section of the riser will be involved in the phenomenon of the formation of hydrates, typically the central sections, as high pressures and low temperature are present in these sections. Under these conditions, the stations can be localized only in the sections involved in the formation phenomenon.
- The type of fluid transported, with particular reference to the amount of water. The higher the presence of water, the higher the probability will be of the formation of hydrates.
- The type of flow established inside the transportation means. This depends on various factors, such as flow-rate, fluid density, viscosity, diameter of the pipeline, inclination, etc. Non-stratified flows require greater attention as they increase the interaction surface between gas and water.

Figures 2 and 3 show examples of the arrangement of the light sources (I) for irradiating the flow in a certain section, in relation to the characteristics of the gas flow (G)/transported liquid (L) (figure 2 laminar flow; figure 3 turbulent flow).

The electromagnetic source interacts, by means of the light sources positioned along the walls of the pipeline, flowline or riser, with the fluid being transported, inhibiting the formation of hydrates. In the design phase of the light sources, it is particularly important to know the type of fluid and flow conditions in order to maximize the illumination on the surface of the water. Considering the operative band of the infrared previously described, the irradiation diagram of the light sources is usually a few degrees in the far infrared or hundredths of degrees in the far infrared, as in the case of lasers. In all cases, it is indispensable to use diverging lenses, which allow the beam to be enlarged, maximizing the irradiated area with the double advantage of reducing the number of light sources necessary for the complete illumination of the fluid.

Another application field relates to local prevention in specific areas with a high probability of the formation of hydrates.

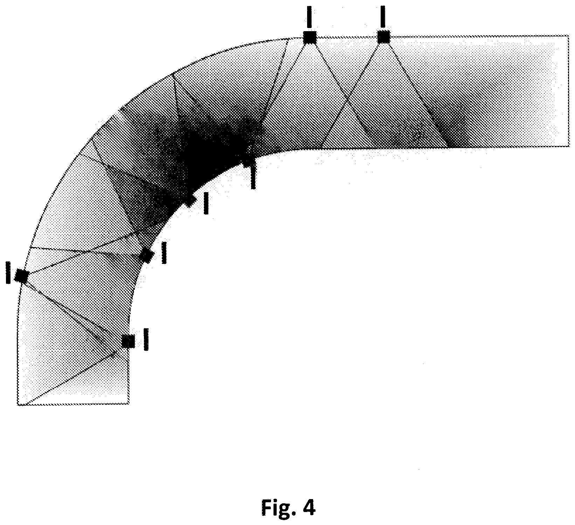

Figure 4 shows an example of the arrangement of the light sources for irradiating the flow in a critical point, such as that close to a bend.

The valves are considered as being critical areas, such as for example, but not only, the choke valves in which the Joule-Thomson effect is manifested, branches off, curves, etc. cannot be excluded, i.e. all situations in which there is a decrease in the section useful for the flow, which causes an acceleration in the fluids, and consequently a variation in the pressure and temperature. In this case, generally occurs a decrease in the temperature and pressure and it is probable that favourable thermodynamic conditions for the formation of hydrates will be formed. In this case, an irradiation focused upstream and/or downstream of the valve, helps to prevent and maintain the correct functioning of the system without complicating or altering the rest of the plant.

## Claims

1. A process for preventing the formation of hydrates in fluids containing gases or gas condensates, which comprises subjecting said fluids to electromagnetic waves, preventing the formation of crystalline bonds responsible for the formation of said hydrates, **characterized in that** the electromagnetic radiations operate within the visible and infrared spectrum region included in the λ band from 500 nm or higher to lower than 0.1 mm (from 3 THz or higher to 600 THz or lower).

2. The process according to claim 1, wherein the electromagnetic waves are within the λ band from 700 nm to 0.1 mm (from 3 THz or higher to 428 THz or lower).

3. The process according to claim 2, wherein the electromagnetic waves are within the λ band from 700 nm to 6 µm (from 50 THz or higher to 428 TH or lower).

4. The process according to claim 1, wherein chemical hydrate-inhibitor additives are added to the fluids containing gases or gas condensates.

5. The process according to claim 4, wherein the chemical hydrate-inhibitor additives are thermodynamic and/or kinetic inhibitors and/or anti-agglomerant agents.

6. The process according to at least one of the previous claims, wherein the electromagnetic waves are emitted by means of irradiation stations which comprise at least one electromagnetic source electrically fed by means of an umbilical system.

7. The process according to claim 6, wherein the irradiation stations are positioned:
• along pipelines transporting and/or treating fluids containing gases or gas condensates;
• in sealines and risers of off-shore plants used for transporting gases/gas condensates;
• upstream and downstream of choke valves;
• in any point of a liquefaction or compression plant of methane for storage;
• in any point of offloading and/or transportation plant of gas coming from liquefied and/or compressed methane carriers, tanks or geological structures.

8. The process according to claim 6, wherein the irradiation stations also comprise one or more light sources situated inside the pipeline or any part of a plant for gas storage in reservoirs or ships for transporting liquefied or compressed gas, in the gas loading and unloading phases from said reservoirs or ships, through which the light radiation will interact with the stream transported.

9. The process according to at least one of the previous claims wherein the gases or gas condensates contained in the fluids are hydrocarbons, such as methane, ethane and propane.

## Patentansprüche

1. Verfahren zur Verhinderung der Bildung von Hydraten in Flüssigkeiten, die Gase oder Gaskondensate enthalten, welches umfasst das Unterwerfen der Fluide mit elektromagnetischen Wellen, Verhinderung der Bildung von kristallinen Bindungen, die für die Bildung der Hydrate verantwortlich sind, **dadurch gekennzeichnet, dass** die elektromagnetischen Strahlungen im sichtbaren und Infrarotspektrum-Bereich arbeiten, einschließlich dem λ-Band von 500 nm oder darüber bis geringer als 0,1 mm (von 3 THz oder darüber bis 600 THz oder darunter).

2. Verfahren nach Anspruch 1, worin die elektromagnetischen Wellen innerhalb des λ-Bandes sind von 700 nm bis 0,1 mm (von 3 THz oder darüber bis 428 THz oder darunter).

3. Verfahren gemäß Anspruch 2, wobei die elektromagnetischen Wellen innerhalb des λ-Bandes sind von 700 nm bis 6 µm (von 50 THz oder darüber bis 428 TH oder darunter).

4. Verfahren nach Anspruch 1, wobei chemische Hydrat-Inhibitor-Additive den Fluiden, die Gase oder Gaskondensate enthalten, zugegeben werden.

5. Verfahren nach Anspruch 4, wobei die chemischen Hydrat-Inhibitor-Additive thermodynamische und/oder kinetische Inhibitoren und/oder Anti-Agglomerant-Mittel sind.

6. Verfahren nach mindestens einem der vorhergehenden Ansprüche, wobei die elektromagnetischen Wellen mittels Strahlungsstationen emittiert werden, die mindestens eine elektromagnetische Quelle umfassen, die elektrisch durch ein Versorgungskabelsystem gespeist wird.

7. Verfahren nach Anspruch 6, wobei die Strahlungsstationen angeordnet sind:
• entlang Pipelines, die Fluide, die Gase oder Gaskondensate enthalten, transportieren und/oder behandeln;
• in Seeleitungen und Steigleitungen von Off-Shore-Werken, die zum Transport von Gasen/Gaskondensaten verwendet werden:
• stromaufwärts oder stromabwärts von Drosselventilen;
• an irgendeinem Punkt eines Verflüssigungs- oder Kompressions-Werks für Methan zur Speicherung;
• an irgendeinem Punkt der Abladung und/oder Transportierwerk für Gas, herrührend von verflüssigten und/oder komprimierten Methanträgern, Tanks oder geologischen Strukturen.

8. Verfahren nach Anspruch 6, wobei die Strahlungsstationen weiterhin umfassen eine oder mehrere Lichtquellen, angeordnet innerhalb der Pipeline oder irgendeinem Teil eines Werks für die Gasspeicherung in Reservoirs oder Schiffen zum Transportieren von verflüssigten oder komprimierten Gasen, bei Gasbeladungs- und Entladungsphasen von diesen Reservoirs oder Schiffen, durch die die Lichtstrahlung mit dem zu transportierenden Strom wechselwirkt.

9. Verfahren nach mindestens einem der vorhergehenden Ansprüche, wobei die Gase oder die Gaskondensate, die in den Fluiden enthalten sind, Kohlenwasserstoffe sind, wie zum Beispiel Methan, Ethan und Propan.

## Revendications

1. Procédé pour empêcher la formation d'hydrates dans des fluides contenant des gaz ou des condensats de gaz, qui comprend le fait de soumettre lesdits fluides à des ondes électromagnétiques, empêchant la formation de liaisons cristallines responsables de la formation desdits hydrates, **caractérisé en ce que** les rayonnements électromagnétiques opèrent dans la région visible et infrarouge du spectre incluse dans la bande λ allant de 500 nm ou plus à moins de 0,1 mm (de 3 THz ou plus à 600 THz ou moins).

2. Procédé selon la revendication 1, dans lequel les ondes électromagnétiques se trouvent à l'intérieur de la bande λ allant de 700 nm à 0,1 mm (de 3 THz ou plus à 428 THz ou moins).

3. Procédé selon la revendication 2, dans lequel les ondes électromagnétiques se trouvent à l'intérieur de la bande λ allant de 700 nm à 6 µm (de 50 THz ou plus à 428 TH ou moins).

4. Procédé selon la revendication 1, dans lequel on ajoute des additifs chimiques inhibiteurs d'hydrates aux fluides contenant des gaz ou des condensats de gaz.

5. Procédé selon la revendication 4, dans lequel les additifs chimiques inhibiteurs d'hydrates sont des inhibiteurs thermodynamiques et/ou des inhibiteurs cinétiques et/ou des agents antiagglomérants.

6. Procédé selon au moins l'une quelconque des revendications précédentes, dans lequel les ondes électromagnétiques sont émises au moyen de postes d'irradiation qui comprennent au moins une source électromagnétique alimentée électriquement au moyen d'un système ombilical.

7. Procédé selon la revendication 6, dans lequel les postes d'irradiation sont positionnés :
• le long de pipelines transportant et/ou traitant des fluides contenant des gaz ou des condensats de gaz ;
• dans des conduites marines et des tubes guides d'installations en mer, utilisé(e)s pour le transport de gaz/condensats de gaz ;
• en amont et en aval de soupapes d'étranglement ;
• en tout point d'une installation de compression ou liquéfaction du méthane pour stockage ;
• en tout point d'une installation de déchargement et/ou de transport de gaz provenant de structures géologiques, citernes ou transporteurs de méthane comprimé et/ou liquéfié,

8. Procédé selon la revendication 6, dans lequel les postes d'irradiation comprennent également une ou plusieurs source(s) située(s) à l'intérieur du pipeline ou d'une partie quelconque d'une installation pour le stockage de gaz dans des réservoirs ou navires pour le transport de gaz comprimé ou liquéfie, dans les phases de chargement et déchargement de gaz à partir desdits réservoirs ou navires, au moyen de laquelle/desquelles le rayonnement lumineux interagira avec le flux transporté.

9. Procédé selon au moins l'une quelconque des revendications précédentes, dans lequel les gaz ou condensats de gaz contenus dans les fluides sont des hydrocarbures, tels que le méthane, l'éthane et le propane.
